# EUROPEAN PATENT SPECIFICATION

(11) **EP 3 094 059 B1**
(45) Date of publication and mention of the grant of the patent: **17.04.2019**
(21) Application number: 15167893.5
(22) Date of filing: 15.05.2015
(51) Int. Cl.: H04L 29/06, H04L 29/12

(54) **ROUTING VOICE OVER LTE CALL INVITES IN A TERMINATING IMS**
ROUTING VON EINLADUNGEN ZU VOICE-OVER-LTE-ANRUFEN IN EINEM ABSCHLUSS-IMS
ROUTAGE D'INVITATIONS D'APPEL LTE VOCAUX DANS UN IMS DE TERMINAISON

(43) Date of publication of application: 16.11.2016
(73) Proprietor: Vodafone GmbH, 40549 Düsseldorf (DE)
(72) Inventor: Purkop, Thomas, 40489 Düsseldorf (DE); Chiado Piat, Giorgio, 10146 Torino (IT); Lübbers, Michael, 40589 Düsseldorf (DE)
(74) Representative: KNH Patentanwälte Neumann Heine Taruttis PartG mbB

(56) References cited:
- US-A1- 2011 142 224
- US-A1- 2013 201 933

## Description

The present invention pertains to an improved method for routing an incoming voice over LTE (VoLTE) call invite message in a terminating IP multimedia subsystem (IMS) by a terminating Interconnection Border Control Function (IBCF) based on checking whether a terminating subscriber is provisioned for VoLTE .

Today mobile phones use the Global System for Mobile Communications (GSM) standard, which belongs to the second generation of mobile telecommunications technology (2G), as well as the Universal Mobile Telecommunications System (UMTS) standard belonging to the third generation of mobile telecommunications technology (3G). Further, belonging to the fourth-generation of mobile telecommunications technology (4G), the Long Term Evolution (LTE) standard is an evolution based on GSM and UMTS network technologies and used in the latest generation of mobile phones, smart phones and other user equipment (UE). GSM defines a circuit-switched (CS) network optimized for full duplex voice telephony and data communication (Voice and Circuit Switched Data), wherein so-called Mobile Switching Centers (MSC) switch the connections between the mobile phones and act as interface between the radio network and the fixed line network. In GPRS, i.e. General Packet Radio Service (GPRS) sometimes referred to as 2.5G, data communications are provided by packet data transport. In contrast, UMTS defines a radio access technology using the same core network as GSM/GPRS, but wherein with Release 4 (R4) separate CS control and media layer were introduced with MSC Servers and Media Gateways (MGW). Voice between the MGWs can be transported based on IP. Increased capacity and speed are available in LTE access networks using advanced digital signal processing (DSP) methods wherein the network architecture is fully based on an IP system. The CS core network as such does not exist and voice calls can be handled either by falling back to GSM/UMTS or can be handled by a protocol based on IP, e.g. VoLTE. VoLTE and VoWiFi are fully based on IMS.

For LTE and other IP-based networks the IMS designed by the 3rd Generation Partnership Project (3GPP) provides an architectural framework for multimedia services based on packet communication like voice, messaging, etc. (e.g. VoLTE, VoWiFi, VoIP in general, RCS, etc.). Although being originally developed for mobile applications IMS is used in wire-less and fixed-line technologies, too. A user, or so-called subscriber, may connect to IMS by registering an IMS terminal directly on an IMS server, wherein the IMS terminal can be a mobile phone including a so-called smart phone, a Personal Digital Assistant (PDA), a computer or any other user equipment (UE). The protocol used in IMS for session handling such as session establishment, modification and termination is the standardized Session Initiation Protocol (SIP).

In IMS different Call Session Control Functions (CSCFs) play central roles as they are used to process the SIP signaling packets and manage the IMS sessions. The Proxy CSCF (P-CSCF) is the first contact point for IMS service requests from SIP clients. The P-CSCF is a SIP proxy and forwards requests from SIP clients/SIP user agents, i.e. subscribers. to other CSCFs and vice versa, as described hereafter. Further, the P-CSCF authenticates the subscriber by checking the available authorizations of the subscriber, negotiates the quality of service and may generate data for accounting besides the S-CSCF. The Interrogating CSCF (I-CSCF) requests from a Home Subscriber Server (HSS) which S-CSCF (see further below) is responsible for managing the desired IMS session for the respective subscriber. The Serving CSCF (S-CSCF) is the main SIP session control node within the overall IMS network. It retrieves user profiles (e.g. the initial Filter Criteria, iFC) associated with a subscriber from the HSS during the registration process, keeps the registration status, forwards the sessions to the different SIP Application Servers (AS) via the iFC and handles the SIP sessions in general. Different services are hosted and executed by different SIP Application Servers (AS) such as Telephony Application Server (TAS) (e.g. VoLTE SIP AS), IM SIP AS and the like. These application servers interface with the S-CSCF. Authentication and authorization of a subscriber is managed by the HSS (as part of the registration process), which is a master user database and contains subscriber profiles. The HSS can provide information about a subscriber's location (S-CSCF), iFC and the like. Different subscribers are discriminated by different identities, typically the Public User Identities (IMPU) and the Private User Identities (IMPI). The IMPU is the identity, which is used by other subscribers to set up a session. In mobile networks this is usually the Mobile Subscriber Integrated Services Digital Network Number (MSISDN). Inter alia there are TEL Uniform Resource Identifiers (TEL URIs) each representing a telephone number of one subscriber. Another IMPU, which is used in IMS for internal routing, is the SIP URI representing the corresponding SIP address or addresses of one subscriber, because the IMS uses domain based addressing. The mapping from the TEL URI to the SIP URI is done in the E.164 Number Mapping (ENUM) server. Different networks are coupled via Interconnection Border Control Functions (IBCF). An Interconnection Border Control Function (IBCF) performs interconnection between different IMSs at a service layer and provides a set of functions at the border of a trusted domain of a provider to enable connections to untrusted networks.

When a first VoLTE provisioned subscriber connected to a first IP Multimedia Subsystem of a first network intends to set up a voice call to another subscriber located in another, different network then the first VoLTE provisioned subscriber transmits a VoLTE call invite message to the other subscriber. Note that the first subscriber can be named call originating subscriber located in an originating IP multimedia subsystem of an originating network. The subscriber located in the other network can be named terminating subscriber located in a terminating network. The originating network and the terminating network may be coupled by Interconnection Border Control Functions, wherein an Interconnection Border Control Function of the originating network is coupled to an Interconnection Border Control Function of the terminating network.

According to conventional standards the VoLTE call invite message from the originating network is transmitted via an Interconnection Border Control Function of an IMS of a first provider and is received by an Interconnection Border Control Function of a terminating IMS of a second provider via an Ici interface. The VoLTE call invite message is then forwarded via an Mx interface to an Interrogating CSCF of the terminating IMS. The Interrogating CSCF requests the address of the corresponding Serving CSCF of the terminating IMS for the terminating subscriber of the VoLTE call invite message from a Home Subscriber Server of the terminating IMS via a Cx interface. As the terminating subscriber is a VoLTE subscriber and hence is provisioned for handling VoLTE calls or at least for receiving incoming VoLTE calls the subscriber is provisioned in the terminating Home Subscriber Server (and the ENUM of the terminating IMS) and the Home Subscriber Server provides to the Interrogating CSCF the address of the Serving CSCF that serves the subscriber. The terminating Interrogating CSCF then forwards the VoLTE call to the respective terminating Serving CSCF via the Mw interface based on the response from the terminating Home Subscriber Server. The terminating Serving CSCF contacts the terminating Telephony Application Server (TAS) for terminating telephony services. After the execution of the terminating service the Telephony Application Server forwards the invite message back to the Serving CSCF from where it is forwarded to the terminating Proxy CSCF via an Mw interface. Finally the terminating Proxy CSCF forwards the VoLTE call invite message to the terminating VoLTE subscriber via a Gm interface. If the terminating subscriber accepts the VoLTE call invite, a VoLTE call session via Packet Switched (PS) and IMS networks of the first and second provider is established for the originating subscriber and the terminating subscriber.

US 2013/0201933 A1 discloses a method for providing a roaming functionality related to an IMS session that includes control signaling in a forward direction to a Roaming Border control Function (RBCF) in a Visited Public Land Mobile Network (VPLMN). Local breakout of media is applied for a roaming first UE in the VPLMN. The RBCF provides a linking of signaling received via a loop through a first IMS domain in a Home Public Land Mobile Network (HPLMN) with media anchored due to the local brake out in the second IMS domain in the VPLMN.

US 2011/0142224 A1 discloses a method including a telephone number mapping query from a querying device, the telephone number mapping query being associated with a call from a calling party to a called party.

If the terminating subscriber is not provisioned for VoLTE (non-VoLTE subscriber), i.e. the terminating subscriber is not configured for handling Voice over LTE sessions or at least to receive Voice over LTE sessions, the Home Subscriber Server cannot find a valid entry. In that case the Home Subscriber Server returns a message to the Interrogating CSCF indicating that the terminating subscriber is unknown. Consequently, the Interrogating CSCF has to use the Interrogating CSCF transit function, which forwards the VoLTE invite message to a Breakout Gateway Control Function (BGCF). The BGCF forwards the call session to the Circuit Switched network (Media Gateway Control Function (MGCF)). This rerouting is time-consuming and uses many resources, namely different HSSs, CSCFs, etc. of the IMS since the IMS cannot directly terminate VoLTE call invites for non-VoLTE subscribers as becomes apparent from the following description.

It is an objective of the present invention to overcome or at least alleviate the described technical problems and disadvantages in routing VoLTE call invite messages from an originating IP Multimedia Subsystem of a first provider to a terminating IP Multimedia Subsystem of a second provider as set forth above. The present invention describes an improved method and a corresponding IP multimedia subsystem for routing an incoming voice over LTE (VoLTE) call invite message in a terminating IP multimedia subsystem by a terminating Interconnection Border Control Function.

### SUMMARY OF THE INVENTION

The objective is achieved by means of a method for routing according to the features of claim 1 and an IP Multimedia Subsystem (IMS) infrastructure according to the second independent claim. Further embodiments are subject of the dependent claims. The features specified individually in the claims may be combined in any technologically meaningful way and may be supplemented by features from the description.

### BRIEF DESCRIPTION OF THE DRAWINGS

- Figure 1A: depicts a schematic diagram of routing a VoLTE call invite message from an originating IMS in a terminating IMS to a non-VoLTE subscriber.
- Figure 1B: depicts a schematic diagram of routing a VoLTE call invite message from an originating IMS in a terminating IMS to a VoLTE subscriber.
- Figure 2A: depicts a schematic sequence of operation diagram for routing a VoLTE call invite message to a non-VoLTE subscriber.
- Figure 2B: depicts a schematic sequence of operation diagram for routing a VoLTE call invite message to a VoLTE subscriber.

### DETAILED DESCRIPTION

The present invention relates to an improved method and a corresponding IP Multimedia Subsystem (IMS) for routing an incoming voice over LTE (VoLTE) call invite message in a terminating IP Multimedia Subsystem. The VoLTE call invite message may be sent by a subscriber located in an originating IP Multimedia Subsystem of a first provider or network operator via an originating Interconnection Border Control Function (IBCF) of said originating IMS. The terminating IMS may be operated by a second provider/operator. The incoming VoLTE call invite message may be received by a terminating Interconnection Border Control Function comprised in the terminating IP Multimedia Subsystem. The VoLTE call invite message may comprise an identifier of a terminating subscriber. The terminating IBCF may check a provisioning for VoLTE of the terminating subscriber via said identifier. If the terminating subscriber is provisioned for VoLTE the terminating IBCF may route the VoLTE call invite message to an Interrogating Call Session Control Function (I-CSCF) comprised in the terminating IMS. If the terminating subscriber is not provisioned for VoLTE the terminating Interconnection Border Control Function may reroute the VoLTE call invite message to a Media Gateway Control Function (MGCF as part of the MSC Server) comprised in a terminating Circuit Switched (CS) network.

In the following description same reference signs are used for the same or equal elements or for elements with similar function.

A terminating IP Multimedia Subsystem (IMS) comprises at least the depicted functional entities, i.e. various Call Session Control Functions (CSCFs) and a Home Subscriber Server (HSS) as well as a E.164 Number Mapping (ENUM) and a Telephony Application Server (TAS). Similarly an originating IP Multimedia Subsystem may comprise at least the depicted functional blocks. The various (CSCFs) as well as the further functional services and servers can be implemented using arbitrary hardware, i.e. the functions and servers may be implemented on separate physical machines or may be integrated on one physical machine. The functional entities are communicatively coupled to at least enable messaging as described below.

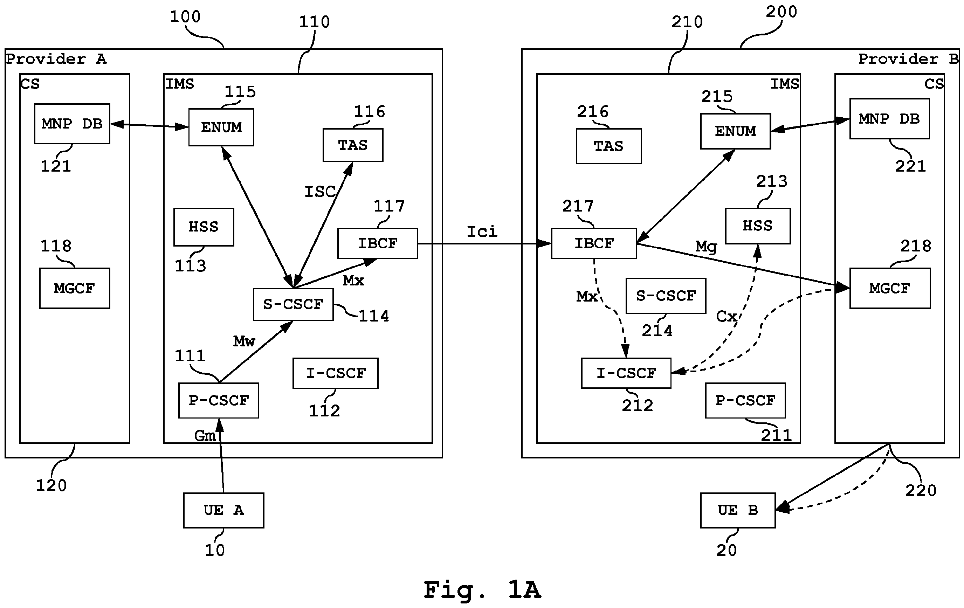

Figure 1A depicts a schematic diagram of termination of a VoLTE call invite message from an originating subscriber (depicted as User Equipment A (UE A)) 10 being a VoLTE subscriber. The originating subscriber is connected to and transmits the VoLTE call invite message via an originating IP Multimedia Subsystem 110 of a Core Network (CN) of a first provider 100 to a terminating subscriber (depicted as UE B) 20. In figure 1A terminating subscriber 20 is considered a non-VoLTE subscriber located in a terminating Core Network of a second provider 200. The messages (requests/responses) sent between IP Multimedia Subsystem nodes are Session Initiation Protocol (SIP) messages. The conventional method according to 3GPP TS 23.228 and as already described afore is depicted by dashed arrows.

When the originating subscriber 10 intends to invite the terminating subscriber 20 to participate in a VoLTE call session, he sends a VoLTE call invite message to the desired terminating subscriber 20, i.e. the VoLTE call invite message shall be routed to the terminating subscriber 20. The VoLTE call invite message in form of a SIP request message sent via a Gm interface contains a TEL Uniform Resource Identifier (URI) of the terminating subscriber 20 and is transmitted by an originating Proxy Call Session Control Function (P-CSCF) 111 comprised by the originating IP Multimedia Subsystem 110 of the Core Network (CN) of the first provider 100. The originating Proxy CSCF 111 forwards the VoLTE call invite message via an Mw interface to an originating Serving Call Session Control Function (S-CSCF) 114, i.e. an S-CSCF located in the IMS where subscriber 10 is registered, for handling the VoLTE call invite message. The originating Serving CSCF 114 invokes an originating Telephony Application Server (TAS) 116 via an ISC interface to execute originating services. These originating services may for example comprise checking if the originating subscriber is allowed to start the desired call session. When the originating services have been executed the VoLTE invite message is sent back to the originating Serving CSCF 114. The originating Serving CSCF 114 then requests from an originating E.164 Number Mapping (ENUM) 115 a Session Initiation Protocol (SIP) URI (see IR.67 v10.0) of the terminating subscriber 20 based on his TEL URI via an ENUM (DNS) request message. The SIP URI of the terminating subscriber 20 comprises information necessary for routing the VoLTE call invite message to the respective IMS hosting the terminating subscriber 20. The originating ENUM 115 provides the corresponding SIP URI by checking a Mobile Number Portability (MNP) DB 121, which provides a national routing number, or by checking a National Destination Code and mapping it to the SIP URI where the domain part of the SIP URI points to the domain of the terminating second operator/provider 200. Then the originating Serving CSCF 114 forwards the VoLTE call invite message based on the SIP URI to an originating Interconnection Border Control Function (IBCF) 117 via an Mx interface for routing the VoLTE call invite message to the terminating IP Multimedia Subsystem 210 of the Core Network of the second provider 200 via an Ici interface communicatively coupling the originating Interconnection Border Control Function 117 and the terminating Interconnection Border Control Function 217. The VoLTE call invite message is received by the terminating Interconnection Border Control Function 217 comprised in the terminating IMS 210.

The method of routing a Voice over LTE call invite message according to the present invention offers a faster and less capacity consuming solution when compared to the conventional method according to 3GPP TS 23.228. The terminating Interconnection Border Control Function 217 is communicatively coupled to a terminating ENUM 215. Upon receipt of the VoLTE call invite message from the originating IMS 110 via the Ici interface the terminating Interconnection Border Control Function 217, after converting the SIP URI of the terminating subscriber 20 back to the corresponding TEL URI of said subscriber, requests information from the ENUM 215 whether the terminating subscriber 20 is provisioned for VoLTE, i.e. whether the terminating subscriber is configured in the terminating IMS for handling VoLTE calls or at least to receive incoming VoLTE calls. In other words the terminating Interconnection Border Control Function 217 transmits an ENUM (DNS) request message to the terminating ENUM 215 (after converting the SIP URI back to the corresponding TEL URI) to check whether the terminating subscriber 20 is configured for receiving a VoLTE call session in the terminating IMS, i.e. the terminating Interconnection Border Control Function 217 sends the TEL URI of the terminating subscriber 20 to the terminating ENUM 215. Terminating ENUM 215 receives and processes the request message from the Interconnection Border Control Function 217. As the terminating ENUM 215 does not provide any corresponding SIP URIs for subscribers that are not provisioned for VoLTE (non-VoLTE subscribers), the terminating ENUM 215 contacts a terminating Mobile Number Portability (MNP) Data Base (DB) 221. The Mobile Number Portability DB 221 may provide a routing number, which is then mapped to a SIP URI. Thus the terminating ENUM 215 can always provide a SIP URI corresponding to the TEL URI of the terminating subscriber 20 - in case the terminating subscriber is provisioned for VoLTE and also in case the subscriber is a non-VoLTE subscriber, i.e. not provisioned for VoLTE.

In case subscriber 20 is a non-VoLTE subscriber and the Mobile Number Portability DB 221 was contacted, the terminating ENUM 215 adds additional information, e.g. a Number Portability Dip Indicator (NPDI) and/or the routing number, to the user part of the SIP URI (see IR.67 v10.0). This SIP URI with additional information in the user part is then sent back to the Interconnection Border Control Function 217. The added information, e.g. the NPDI and/or routing number, indicates that a request to the terminating Mobile Number Portability DB 221 was made and that the terminating subscriber 20 is not provisioned as VoLTE subscriber in the terminating IMS 210. The terminating Interconnection Border Control Function 217 identifies whether there is a NPDI and/or routing number present and reroutes the VoLTE call invite message based on the retrieved SIP URI containing the NPDI and/or routing number directly to a terminating Media Gateway Control Function 218 for rerouting to a terminating Circuit Switched (CS) network 220. The VoLTE call invite message is then forwarded to the terminating non-VoLTE subscriber 20 via the terminating CS network 220 and a conventional CS based call is established between the terminating Media Gateway Control Function 218 and the terminating subscriber 20 (between the originating subscriber 10 and the terminating Media Gateway Control Function 218 the call is still a "VoLTE" call) if the terminating subscriber 20 accepts the session invite (the CS information (messages) used for signaling are mapped to SIP messages in the MGCF 218). Consequently, the method for routing according to the present invention does not waste capacity of the CSCF's of the terminating IMS 210. Hence the proposed method is faster and does not consume as much capacity as the conventional method.

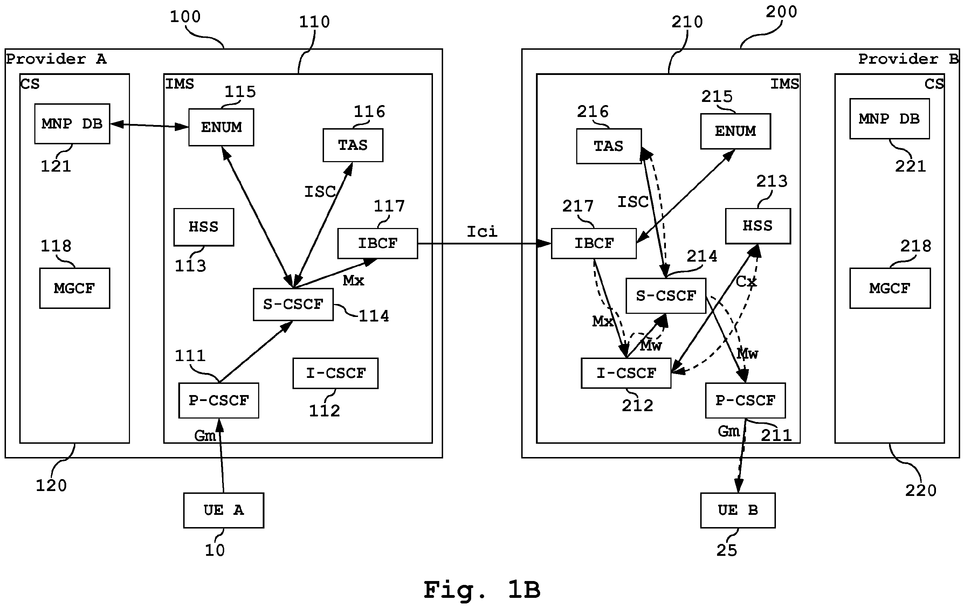

Figure 1B depicts the routing of a VoLTE call invite message as in Figure 1A from the originating VoLTE subscriber 10 via the originating IMS 110 of the Core Network of the first provider 100 to a terminating subscriber 25, wherein the terminating subscriber is provisioned for VoLTE in the terminating IMS 210 of the Core Network of the second provider 200. The signaling in the originating leg, i.e. the routing of the VoLTE invite message in the originating IMS 110, can be equal to that in Figure 1A. The conventional method according to 3GPP TS 23.228 and as described in the introduction is depicted by the dashed arrows.

According to the proposed method the terminating Interconnection Border Control Function 217 is communicatively coupled to the terminating ENUM 215 and transmits a request message comprising the TEL URI of the terminating subscriber to said terminating ENUM 215. The ENUM 215 provides to the Interconnection Border Control Function 217 a SIP URI corresponding to the TEL URI of the terminating VoLTE subscriber 25. As the terminating subscriber 25 is provisioned for VoLTE in the terminating ENUM 215, said ENUM 215 has an entry for the terminating VoLTE subscriber 25 and provides the corresponding SIP URI without NPDI and/or routing number of the terminating subscriber 25 in a response message to the terminating Interconnection Border Control Function 217. The Interconnection Border Control Function 217 being communicatively coupled to Interrogating CSCF 212 then forwards the VoLTE call invite message via the Mx interface to the terminating Interrogating CSCF 212. Interrogating CSCF 212, which is communicatively coupled via the Cx interface with the terminating Home Subscriber Server 213 in turn requests the respective terminating Serving CSCF 214 for the VoLTE call invite message from the terminating Home Subscriber Server 213. Since the terminating subscriber 25 is provisioned for VoLTE calls in the terminating IP Multimedia Subsystem 210, the Home Subscriber Server 213 may provide corresponding information in a response message to the Interrogating CSCF 212. The Interrogating CSCF 212 is communicatively coupled to Serving CSCFs 214, e.g. via the Mw interface. Based on the (positive) response provided by the terminating Home Subscriber Server 213 containing the information, which Serving CSCF 214 shall handle the VoLTE call invite, the terminating Interrogating CSCF 212 forwards the VoLTE call invite message to the respective terminating Serving CSCF 214 via the Mw interface. Similar as in the standard method the terminating Serving CSCF 214 contacts a terminating Telephony Application Server 216 via the ISC interface for the execution of terminating services. After the execution of the terminating services the VoLTE call invite message is sent back to the terminating Serving CSCF 214. The terminating S-CSCF 214 then forwards the VoLTE call invite message via the Mw interface to the terminating Proxy CSCF 211 for termination of the VoLTE call invite message to the terminating VoLTE subscriber 25 via the Gm interface.

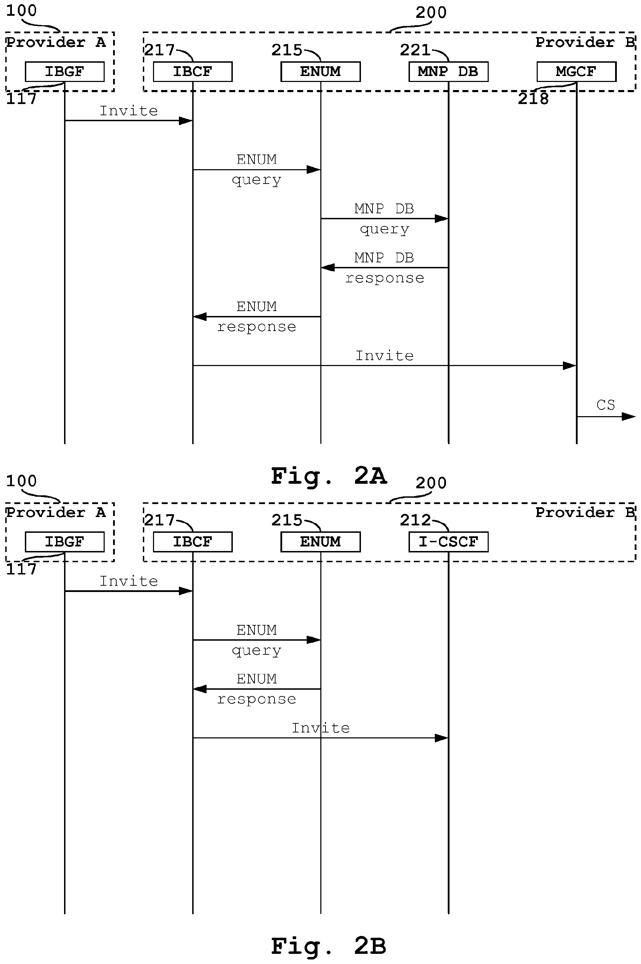

Figure 2A shows in detail the rerouting process according to the present invention initiated by the terminating Interconnection Border Control Function 217 in case the terminating subscriber 20 is not provisioned for handling VoLTE call sessions. An incoming VoLTE call invite, which is transmitted via the originating Interconnection Border Control Function 117 of the originating IP Multimedia Subsystem 110 of the Core network of the first provider 100, is received by the terminating Interconnection Border Control Function 217 of the terminating IP Multimedia Subsystem 210 of the Core Network of the second provider 200. The terminating Interconnection Border Control Function 217 recognizes the type of the received SIP message as being a VoLTE call invite message. Consequently, the terminating Interconnection Border Control Function 217 sends a request message to the terminating ENUM 215 containing the TEL URI of the terminating subscriber 20. ENUM 215 receives the request message from Interconnection Border Control Function 217, but since the terminating subscriber 20 is a non-VoLTE subscriber and not provisioned for VoLTE, the terminating ENUM 215 does not contain a SIP URI corresponding to the provided TEL URI of the terminating subscriber. Therefore, the terminating ENUM 215 sends a query comprising the TEL URI of the terminating subscriber 20 to the terminating Mobile Number Portability DB 221. The terminating Mobile Number Portability DB 221 provides a routing number in a response message to the terminating ENUM 215 based on the entry in the Mobile Number Portability DB 221 for ported numbers or based on a National Destination Code received in the ENUM 215 to MNP DB request. The terminating ENUM 215 maps the received routing number to a SIP URI. Further the SIP URI contains a NPDI to indicate that MNP DB check was done and thus the terminating subscriber 20 is not listed in the terminating ENUM 215 as provisioned for VoLTE calls. Furthermore, also the routing number may be added to the user part of the SIP URI. The terminating ENUM 215 passes a corresponding response to the terminating Interconnection Border Control Function 217. Based on the SIP URI containing the NPDI and/or the routing number the terminating Interconnection Border Control Function 217 reroutes the VoLTE request to the terminating Media Gateway Control Function 218 for CS breakout.

Figure 2B shows in detail the routing process according to the present invention initiated by the terminating Interconnection Border Control Function 217 in case the terminating subscriber 25 is provisioned for VoLTE in the terminating IP Multimedia Subsystem 210. Interconnection Border Control Function 117, which is located in the originating IP Multimedia Subsystem 110, passes a VoLTE call invite message from the originating subscriber 10 to the terminating Interconnection Border Control Function 217 located in the terminating IP Multimedia Subsystem 210. Said VoLTE call invite message comprises a SIP URI specifying the terminating subscriber 25. Upon receipt of the message terminating Interconnection Border Control Function 217 recognizes the type of the received message as being a VoLTE call invite message. As a consequence terminating Interconnection Border Control Function 217 sends a request message to the terminating ENUM 215 located in the terminating IP Multimedia Subsystem 210 to query information regarding the provisioning for VoLTE calls of the subscriber associated with the TEL URI provided in the received VoLTE call invite message. Since terminating subscriber 25 is provisioned to handle VoLTE calls, i.e. UE B 25 is configured in the terminating IP Multimedia Subsystem 210 as being allowed to at least receive VoLTE calls, terminating ENUM 215 sends a response message to the terminating Interconnection Border Control Function 217, wherein said response message comprises a SIP URI that corresponds to the TEL URI of the terminating subscriber 25 as specified in the request message. Note that in this case the SIP URI as provided in the response message does not comprise a Number Portability Dip Indicator (NPDI) or the routing number as no MNP DB check is done. Terminating Interconnection Border Control Function 217 recognizes that the provided SIP URI, because it does not comprise an NPDI or routing number, specifies that the terminating subscriber 25 is provisioned for handling VoLTE calls, thus the VoLTE call invite message can be forwarded to the terminating Interrogating CSCF 212 for forwarding the VoLTE call invite message to the terminating subscriber 25.

In this way the Interconnection Border Control Function 217 of the terminating IP Multimedia Subsystem 210 retrieves information, i.e. the SIP URI that enables the terminating Interconnection Border Control Function 217 to forward the VoLTE call invite message.

A TEL URI comprised in a VoLTE call invite message (request) as may be received in a request by terminating ENUM 215 may look like:
Tel: +491721234567
wherein the +49 represents the country code, 172 represents the National Destination Code and 1234567 represents the subscriber number.

If the terminating ENUM 215 receives such TEL URI in a request message provided by terminating Interconnection Border Control Function 217 and the terminating subscriber is not configured to handle, i.e. at least to receive VoLTE calls in the terminating IP Multimedia Subsystem 210, then terminating ENUM 215 forwards the TEL URI in a request message to the Mobile Number Portability DB 221 in order to check which provider/operator serves the TEL URI. The Mobile Number Portability DB 221 provides a routing number which also includes an ID that identifies the service provider/operator, e.g.:
49DYYY1721234567
wherein DYYY is the ID that corresponds to the serving provider/operator of the received number 491721234567.

The ENUM 215 composes a new SIP URI based on the DYYY. This newly composed SIP URI comprises a Number Portability Dip Indicator (NPDI) and optionally also the received routing number for indicating that a request to the MNP DB was sent. In other words said NPDI indicates that the associated subscriber is not provisioned, i.e. configured, to handle VoLTE calls. Note that in case the subscriber is provisioned in the ENUM then an MNP DB check is not triggered. Such SIP URI including the NPDI and the routing number may look like:
**sip: +491721234567;npdi;rn=49DYYY1721234567@ims.**
**mnc<MNC>.mcc<MCC>.3gppnetwork.org (see IR.67 v10.0)**

Based on such SIP URI for a non-VoLTE subscriber, the Interconnection Border Control Function 217 of the terminating IP Multimedia Subsystem 210 is enabled to reroute a VoLTE call invite message directly via a Media Gateway Control Function 217 to a Circuit Switched network 220 for termination.

## Claims

1. A method for routing an incoming voice over LTE, VoLTE, call invite message in a terminating IP multimedia subsystem, IMS, (210) comprising the steps of:
- receiving an incoming VoLTE call invite message by a terminating Interconnection Border Control Function, IBCF, (217) comprised in the terminating IMS (210), the VoLTE call invite message being transmitted by an originating IBCF (117) comprised in an originating IMS (110) and comprising an identifier of a terminating subscriber (20, 25); and
- checking a provisioning for handling VoLTE calls of the terminating subscriber (20, 25) via the identifier by the terminating IBCF (217); and
- if the terminating subscriber (25) is provisioned for VoLTE routing the VoLTE call invite message by the terminating IBCF (217) to an Interrogating Call Session Control Function, I-CSCF, (212) comprised in the terminating IMS; and
- if the terminating subscriber (20) is not provisioned for VoLTE rerouting the VoLTE call invite message by the terminating IBCF (217) to a Media Gateway Control Function (218), MGCF.

2. Method according to claim 1, wherein the step of checking comprises the step of transmitting by the terminating IBCF (217) a request comprising the identifier of the terminating subscriber (20, 25) to a terminating E.164 Number Mapping (215), ENUM, wherein the identifier is a Telephone Uniform Resource Identifier, TEL URI, and receiving a response by the terminating IBCF (217) from the terminating ENUM (215) comprising a Session Initiation Protocol, SIP, URI associated with the TEL URI of the terminating subscriber (20, 25).

3. Method according to claim 2, wherein the step of checking further comprises the step of transmitting by the terminating ENUM (215) a request to a Mobile Number Portability Data Base, MNP DB, (221) if the terminating subscriber (20) is not provisioned for handling VoLTE calls.

4. Method according to claim 3, wherein the SIP URI comprised in the response from the terminating ENUM (215) contains a Number Portability Dip Indicator, NPDI, and/or a routing number if the terminating subscriber (20) is not provisioned for VoLTE and wherein rerouting the VoLTE call invite message by the terminating IBCF (217) to the MGCF (218) is based on the NPDI and/or the routing number.

5. A terminating IMS (210) comprising:
- an terminating Interconnection Border Control Function, IBCF, (217) communicatively coupled to an originating IBCF (117) of an originating IMS (110), wherein the terminating IBCF (217) is configured for receiving a Voice over LTE, VoLTE, call invite message from the originating IBCF (117) and configured for checking a provisioning for handling VoLTE calls of a terminating subscriber (20, 25) of the VoLTE call invite message and configured for routing the VoLTE call invite message based on the checked provisioning for handling VoLTE calls; and
- an Interrogating Call Session Control Function, I-CSCF, (212) communicatively coupled to the terminating IBCF (217), wherein the I-CSCF (212) is configured for receiving the VoLTE call invite message from the terminating IBCF (217); and
- a Media Gateway Control Function, MGCF, (218) communicatively coupled to the terminating IBCF (217), wherein MGCF (218) is configured for receiving the VoLTE call invite message from the terminating IBCF (217).

6. Terminating IMS (210) according to claim 5, further comprising a terminating E.164 Number Mapping, ENUM, (215) communicatively coupled to the terminating IBCF (217), wherein the terminating ENUM (215) is configured for receiving a request containing a TEL Unique Identifier Resource, URI, from the terminating IBCF (217) and configured for mapping a corresponding Session Initiation Protocol, SIP, URI to the TEL URI of the terminating subscriber (20, 25) and configured for sending a response containing the SIP URI to the terminating IBCF (217).

7. Terminating IMS (210) according to claim 6, wherein the terminating ENUM (215) is configured for sending a request to a Mobile Number Portability Data Base, MNP DB, (221) if the terminating subscriber (20) is not provisioned for handling VoLTE calls.

8. Terminating IMS (210) according to claims 6 to 7, wherein the terminating ENUM (215) is configured for adding a Number Portability Dip Indicator, NPDI, and/or routing number if the terminating subscriber (20) is not provisioned for VoLTE.

## Patentansprüche

1. Verfahren zum Leiten einer eingehenden Sprache-über-LTE-Anrufeinladungsnachricht, VoLTE-Anrufeinladungsnachricht, in einem End-IP-Multimedia-Untersystem, IMS, (210), das die folgenden Schritte umfasst:
- Empfangen einer eingehenden VoLTE-Anrufeinladungsnachricht durch eine Endverbindungsgrenzsteuerfunktion, End-IBCF, (217), die im End-IMS (210) enthalten ist, wobei die VoLTE-Anrufeinladungsnachricht durch eine Ausgangs-IBCF (117), die in einem Ausgangs-IMS (110) enthalten ist, gesendet wird und eine Kennung eines Endteilnehmers (20, 25) enthält;
- Prüfen einer Ausstattung zum Handhaben von VoLTE-Anrufen des Endteilnehmers (20, 25) mittels der Kennung durch die End-IBCF (217);
- dann, wenn der Endteilnehmer (25) für VoLTE ausgestattet ist, Leiten der VoLTE-Anrufeinladungsnachricht durch die End-IBCF (217) zu einer Anrufsitzungsabfragesteuerfunktion, I-CSCF, (212), die im End-IMS enthalten ist; und
- dann, wenn der Endteilnehmer (20) nicht für VoLTE ausgestattet ist, Umleiten der VoLTE-Anrufeinladungsnachricht durch die End-IBCF (217) zu einer Medien-Gateway-Steuerfunktion (218), MGCF.

2. Verfahren nach Anspruch 1, wobei der Schritt des Prüfens den Schritt des Sendens durch die End-IBCF (217) einer Anforderung, die die Kennung des Endteilnehmers (20, 25) umfasst, zu einer End-E.164-Nummernabbildung (215), End-ENUM, umfasst, wobei die Kennung eine einheitliche Telefonbetriebsmittelkennung, TEL-URI, ist und das Empfangen einer Antwort durch die End-IBCF (217) von der End-ENUM (215) eine Sitzungsinitiierungsprotokoll-URI, SIP-URI, die der TEL-URI des Endteilnehmers (20, 25) zugeordnet ist, umfasst.

3. Verfahren nach Anspruch 2, wobei der Schritt des Prüfens ferner den Schritt des Sendens durch die End-ENUM (215) einer Anforderung an eine Mobilnummernportabilitätsdatenbank, MNP-DB, (221) umfasst, wenn der Endteilnehmer (20) nicht zum Handhaben von VoLTE-Anrufen ausgestattet ist.

4. Verfahren nach Anspruch 3, wobei die SIP-URI, die in der Antwort von der End-ENUM (215) enthalten ist, eine Nummernportabilitätsabfallkennung, NPDI, und/oder eine Leitnummer enthält, wenn der Endteilnehmer (20) nicht für VoLTE ausgestattet ist, und das Umleiten der VoLTE-Anrufeinladungsnachricht durch die End-IBCF (217) zur MGCF (218) auf der NPDI und/oder der Leitnummer basiert.

5. End-IMS (210), das Folgendes umfasst:
- eine Endverbindungsgrenzsteuerfunktion, IBCF, (217), die mit einer Ausgangs-IBCF (117) eines Ausgangs-IMS (110) kommunikationstechnisch gekoppelt ist, wobei die End-IBCF (217) konfiguriert ist, eine Sprache-über-LTE-Anrufeinladungsnachricht, VoLTE-Anrufeinladungsnachricht, von der Ausgangs-IBCF (117) zu empfangen und konfiguriert ist, eine Ausstattung zum Handhaben von VoLTE-Anrufen eines Endteilnehmers (20, 25) der VoLTE-Anrufeinladungsnachricht zu prüfen, und konfiguriert ist, die VoLTE-Anrufeinladungsnachricht auf der Grundlage der geprüften Ausstattung zum Handhaben von VoLTE-Anrufen zu leiten;
- eine Anrufsitzungsabfragesteuerfunktion, I-CSCF, (212), die mit der End-IBCF (217) kommunikationstechnisch gekoppelt ist, wobei die I-CSCF (212) zum Empfangen der VoLTE-Anrufeinladungsnachricht von der End-IBCF (217) konfiguriert ist; und
- eine Medien-Gateway-Steuerfunktion, MGCF, (218), die mit der der End-IBCF (217) kommunikationstechnisch gekoppelt ist, wobei die MGCF (218) zum Empfangen der VoLTE-Anrufeinladungsnachricht von der End-IBCF (217) konfiguriert ist.

6. End-IMS (210) nach Anspruch 5, das ferner eine EndE.164-Nummernabbildung (215), End-ENUM, umfasst, die kommunikationstechnisch an die End-IBCF (217) gekoppelt ist, wobei die End-ENUM (215) zum Empfangen einer Anforderung, die eine einheitliche TEL-Betriebsmittelkennung, TEL-URI, enthält, von der End-IBCF (217) konfiguriert ist, zum Abbilden einer entsprechenden Sitzungsinitiierungsprotokoll-URI, SIP-URI, auf die TEL-URI des Endteilnehmers (20, 25) konfiguriert ist, und zum Senden einer Antwort, die die SIP-URI enthält, zur End-IBCF (217) konfiguriert ist.

7. End-IMS (210) nach Anspruch 6, wobei die die End-ENUM (215) konfiguriert ist, eine Anforderung an eine Mobilnummernportabilitätsdatenbank, MNP-DB, (221) zu senden, wenn der Endteilnehmer (20) nicht zum Handhaben von VoLTE-Anrufen ausgestattet ist.

8. End-IMS (210) nach Anspruch 6 oder 7, wobei die End-ENUM (215) konfiguriert ist, eine Nummernportabilitätsabfallkennung, NPDI, und/oder eine Leitnummer hinzuzufügen, wenn der Endteilnehmer (20) nicht für VoLTE ausgestattet ist.

## Revendications

1. Procédé de routage d'un message d'invitation d'appel LTE vocal entrant, VoLTE, dans un sous-système multimédia IP de terminaison, IMS, (210) comprenant les étapes consistant à :
- la réception d'un message d'invitation d'appel VoLTE entrant par une fonction de commande de frontière d'interconnexion de terminaison, IBCF, (217) comprise dans l'IMS de terminaison (210), le message d'invitation d'appel VoLTE étant transmis par un IBCF d'origine (117) compris dans un IMS d'origine (110) et comprenant un identifiant d'un abonné de destination (20, 25) ; et
- la vérification qu'est prévu le traitement des appels VoLTE de l'abonné de destination (20, 25) via l'identifiant par l'IBCF de terminaison (217) ; et
- si l'abonné de destination (25) est prévu pour le VoLTE, le routage du message d'invitation d'appel VoLTE par l'IBCF de terminaison (217) vers une fonction de commande de session d'appel interrogative, I-CSCF, (212) comprise dans l'IMS de terminaison ; et
- si l'abonné de destination (20) n'est pas prévu pour VoLTE, le reroutage du message d'invitation d'appel VoLTE par l'IBCF de terminaison (217) vers une fonction de commande de passerelle média (218), MGCF.

2. Procédé selon la revendication 1, l'étape de vérification comprenant l'étape de transmission par l'IBCF de terminaison (217) d'une requête comprenant l'identifiant de l'abonné de destination (20, 25) à un mappage de numéros E.164 de terminaison (215), ENUM, l'identifiant étant un identifiant de ressource téléphonique uniforme, URI TEL, et la réception d'une réponse par l'IBCF de terminaison (217) de l'ENUM de terminaison (215) comprenant un URI de protocole d'initiation de session, SIP, associé avec l'URI TEL de l'abonné de destination (20, 25).

3. Procédé selon la revendication 2, l'étape de vérification comprenant en outre l'étape de transmission par l'ENUM de terminaison (215) d'une requête à une base de données de portabilité de numéro mobile, MNP DB, (221) si l'abonné de destination (20) n'est pas prévu pour traiter des appels VoLTE.

4. Procédé selon la revendication 3, l'URI SIP compris dans la réponse de l'ENUM de terminaison (215) contenant un indicateur dip de portabilité de numéro, NPDI et/ou un numéro de routage si l'abonné de destination (20) n'est pas prévu pour VoLTE, et le reroutage du message d'invitation d'appel VoLTE par l'IBCF de terminaison (217) au MGCF (218) étant basé sur le NPDI et/ou le numéro de routage.

5. IMS de terminaison (210) comprenant :
- une fonction de commande de frontière d'interconnexion de terminaison, IBCF, (217) couplée de manière communicative à un IBCF d'origine (117) d'un IMS d'origine (110), l'IBCF de terminaison (217) étant configuré pour recevoir un message d'invitation d'appel LTE vocal, VoLTE, de l'IBCF d'origine (117) et configuré pour vérifier qu'est prévu le traitement des appels VoLTE d'un abonné de destination (20, 25) du message d'invitation d'appel VoLTE et configuré pour router le message d'invitation d'appel VoLTE sur la base qu'il est vérifié que le traitement des appels VoLTE est prévu ; et
- une fonction de commande de session d'appel d'interrogation, I-CSCF, (212) couplée de manière communicative à l'IBCF de terminaison (217), l'I-CSCF (212) étant configuré pour recevoir le message d'invitation d'appel VoLTE de l'IBCF de terminaison (217) ; et
- une fonction de commande de passerelle de média, MGCF, (218) couplée de manière communicative à l'IBCF de terminaison (217), la MGCF (218) étant configurée pour recevoir le message d'invitation d'appel VoLTE de l'IBCF de terminaison (217).

6. IMS de terminaison (210) selon la revendication 5, comprenant en outre un mappage de numéro E.164 de terminaison, ENUM, (215) couplé de manière communicative à l'IBCF de terminaison (217), l'ENUM de terminaison (215) étant configuré pour recevoir une requête contenant une ressource d'identifiant unique TEL, URI, de l'IBCF de terminaison (217) et configuré pour mapper un URI de protocole d'initiation de session SIP, correspondant à l'URI TEL de l'abonné de destination (20, 25) et configuré pour envoyer une réponse contenant l'URI SIP à l'IBCF de terminaison (217).

7. IMS de terminaison (210) selon la revendication 6, l'ENUM de terminaison (215) étant configuré pour envoyer une requête à une base de données de portabilité de numéro mobile, MNP DB, (221) si l'abonné de destination (20) n'est pas prévu pour traiter des appels VoLTE.

8. IMS de terminaison (210) selon les revendications 6 à 7, l'ENUM de terminaison (215) étant configuré pour ajouter un indicateur dip de portabilité de numéro, NPDI et/ou un numéro de routage si l'abonné de destination (20) n'est pas prévu pour VoLTE.
